Europäisches Patentamt

European Patent Office

Office européen des brevets

(11) Veröffentlichungsnummer: **0 096 248**

**A1**

(12) # EUROPÄISCHE PATENTANMELDUNG

(21) Anmeldenummer: 83104887.1

(22) Anmeldetag: 18.05.83

(51) Int. Cl.³: **B 29 C 17/03**

(30) Priorität: 04.06.82 DE 3221100

(43) Veröffentlichungstag der Anmeldung:
21.12.83 Patentblatt 83/51

(84) Benannte Vertragsstaaten:
AT DE FR GB IT NL

(71) Anmelder: Röhm GmbH
Kirschenallee Postfach 4242
D-6100 Darmstadt 1(DE)

(72) Erfinder: Krajec, Otmar
An der Fuchsenhütte 38
D-6101 Rossdorf 1(DE)

(72) Erfinder: Hellmann, Walter
Hauptstrasse 73
D-6101 Rossdorf 2(DE)

(54) Verfahren und Vorrichtung zur Herstellung eines starren, einstückigen, dünnwandigen Formkörpers aus gerecktem Kunststoff.

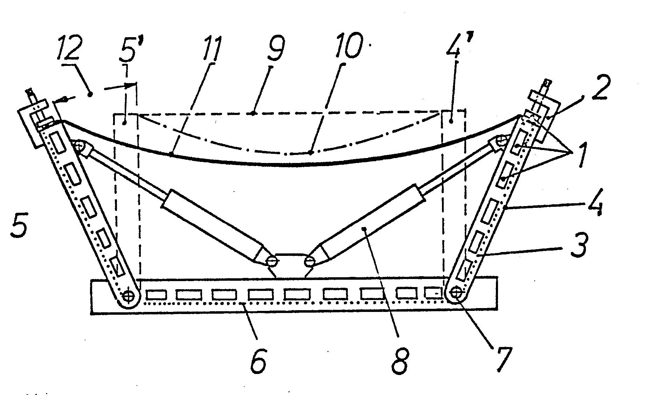

(57) Mittels des Verfahrens und der in der Zeichnung dargestellten Vorrichtung lassen sich die genannten Formkörper, deren Rand nicht in einer Ebene liegt und die eine der mathematischen Minimalfläche angenäherte Fläche haben, mit verbesserter Maßgenauigkeit herstellen. Eine ebene Platte (9) aus biaxial gerecktem Kunststoff von wenigstens 1 mm Dicke wird in eine nicht in einer Ebene liegende Gestalt, z.B. eine Halbzylinderfläche, gebracht und der Plattenrand (3) in dieser Stellung fixiert. Beim Erwärmen auf eine Temperatur im thermoelastischen Zustandsbereich schrumpft die Fläche teilweise unter Ausbildung einer der Minimalfläche angenäherten Gestalt zurück, während die Rückschrumpfung des Randes (3) durch die Fixierung verhindert wird. Erfindungsgemäß werden Teile des fixierten Randes (3), zwischen denen vor Beginn der Rückschrumpfung die Kunststoffplatte (9) geradlinig verläuft, nach dem Erwärmen auf einen größeren Abstand gebracht und vor der Abkühlung erneut fixiert, wodurch spannungsbedingte Maßabweichungen nach dem Lösen der Fixierung ausgeglichen werden.

Verfahren und Vorrichtung zur Herstellung eines starren, einstückigen, dünnwandigen Formkörpers aus gerecktem Kunststoff

Die Erfindung betrifft ein Verfahren zur Herstellung eines starren, einstückigen, dünnwandigen Formkörpers aus gerecktem Kunststoff, dessen Rand nicht in einer Ebene liegt und der eine kleinere Fläche als die von seinem Rand eingeschlossene gedachte ebene Ausgangsfläche hat, gemäß dem Oberbegriff des Anspruchs 1 sowie eine Vorrichtung zur Durchführung des Verfahrens.

Stand der Technik

Aus der internat. Patentanmeldung WO 81/01304 sind starre, einstückige, biaxial gereckte Kunststoffformkörper und ein Verfahren zu ihrer Herstellung bekannt. Bei dem bekannten Verfahren wird eine ebene Platte aus biaxial gerecktem Kunststoff von mindestens 1 mm Dicke derartig verformt, daß der Plattenrand in eine nicht in einer Ebene liegende Stellung gebracht und in dieser Stellung fixiert wird und daß die von dem Rand eingeschlossene Fläche bis zum thermoelastischen Zustand erwärmt und teilweise rückschrumpfen gelassen wird, während durch die Fixierung des Plattenrandes eine Rückschrumpfung des Randes verhindert wird. Man kann z.B. die eingesetzte ebene Platte aus biaxial gerecktem Kunststoff elastisch zu einem halbzylinder-förmigen Tunnel krümmen und den Plattenrand in dieser Stellung mit geeigneten Mitteln fixieren. Wenn die von dem Rand eingeschlossene Fläche nunmehr bis zu einer Temperatur im thermoelastischen Zustandsbereich erhitzt wird, so bildet sich unter teilweiser Rückschrumpfung eine sattelförmige Fläche, während der Rand in seiner fixierten Stellung verbleibt. Nach Abkühlung unter die Erweichungstemperatur kann die Fixierung gelöst werden und man kann den erhaltenen starren, einstückigen Formkörper von der Herstellungsvorrichtung abnehmen.

Bei der technischen Herstellung derartiger Formkörper haben sich Probleme in der Maßhaltigkeit ergeben. Obwohl der Rand während des ganzen Herstellungsverfahrens fest fixiert bleibt, erwiesen sich die bereits erwähnten Tunnelelemente nach dem Abnehmen aus der Herstellungsvorrichtung am Scheitel kürzer als an der Basis, jeweils gemessen in der Längsrichtung des Tunnels. Diese Abweichungen lassen sich dadurch beseitigen, daß man die Ränder nachträglich beschneidet oder von vornherein ein Plattenstück verwendet, das in der Scheitellinie des Tunnels länger als an der Basis ist. Dies erfordert jedoch zusätzliche Arbeitsgänge und bedingt einen Materialverlust.

Durch eine genauere Untersuchung des Verfahrensablaufes konnte die Ursache der Maßabweichungen ermittelt werden. Wenn die am Rand fixierte, biaxial gereckte Kunststoffscheibe über ihre Erweichungstemperatur erwärmt wird, werden die bei ihrer Herstellung aufgewandten Reckkräfte in Form von Rückstellkräften freigesetzt, welche auf den fixierten Rand einwirken und die sattelförmige Verformung des vom Rand eingeschlossenen Flächenbereiches bewirken. Beim Abkühlen unter die Erweichungstemperatur werden die freigesetzten Rückstellkräfte nicht vollständig wieder eingefroren, vielmehr bleibt eine auf den fixierten Rand wirkende Kraft bestehen, die der elastischen Dehnung des erkalteten Kunststoffes entspricht. Beim Lösen der Fixierung gibt der Plattenrand dieser elastischen Kraft nach und weicht aus der ursprünglich fixierten Stellung aus. Dieser Effekt ist am Scheitel des Tunnelelements besonders stark, weil die in Längsrichtung des Tunnels wirkenden elastischen Kräfte durch quer dazu verlaufende Kräfte verstärkt werden, welche auf eine weitere Absenkung der Sattelfläche hinwirken. In Folge der antiklastischen Krümmung der Formkörperfläche üben diese Querkräfte eine Zugkraft auf die Scheitelpunkte an den Tunneleingängen aus.

## Aufgabe und Lösung

Die geschilderten Maßabweichungen sollen durch ein verbessertes Verfahren und eine verbesserte Vorrichtung zur Herstellung der erwähnten starren, einstückigen, dünnwandigen Formkörper ohne Materialverlust und ohne zusätzliche Zuschneidearbeiten vermieden werden. Die gestellte Aufgabe wird durch das Verfahren und die Vorrichtung gemäß den Patentansprüchen gelöst.

In der beigefügten Zeichnung ist die erfindungsgemäß verwendete Herstellungsvorrichtung in Seitenansicht dargestellt. Der mit voll ausgezogenen Linien dargestellte Zustand entspricht dem Ende des Verfahrens, während der Zustand zu Beginn des Verfahrens mit gestrichelten Linien dargestellt ist. Eine punktierte Linie bezeichnet den Plattenrand. Aus Gründen der Anschaulichkeit wurde die Vergrößerung des Abstandes der fixierten Randteile stark übertrieben dargestellt.

Definitionen

Als "Ebene" wird eine geometrische Fläche bezeichnet, in der durch jeden Punkt beliebig viele Geraden gelegt werden können. Diese Definition deckt sich mit dem allgemeinen Sprachgebrauch.

Dagegen wird als "ebene Ausgangsfläche" eine geometrische Fläche bezeichnet, in der durch jeden beliebigen Punkt mindestens eine Gerade gelegt werden kann. Es handelt sich also nicht um eine Ebene im allgemeinen Sprachgebrauch, sondern beispielsweise um eine Zylinderfläche, Kegelfläche oder Satteldachfläche. Ebene Flächen dieser Art können aus einer Ebene (im oben definierten Sinne) durch Krümmen oder Knicken um eine oder mehrere Achsen hervorgebracht werden. Die Bezeichnung "Ausgangsfläche" wurde gewählt, weil es diejenige Fläche ist, aus der der erfindungsgemäß ablaufende Rückschrumpfungsvorgang seinen Ausgang nimmt. An dem fertigen Formkörper ist eine ebene Ausgangsfläche nicht mehr vorhanden, weshalb von einer "gedachten" ebenen Ausgangsfläche gesprochen wird.

-.5 -

Die "gedachte ebene Ausgangsfläche" des fertigen Formkörpers ergibt sich durch die Bewegung einer Geraden über den gekrümmten oder geknickten Plattenrand.

Die von dem Rand eingeschlossene Fläche ist kleiner als die erwähnte "gedachte ebene Ausgangsfläche" und stellt im Idealfall eine mathematische Minimalfläche dar. Darunter ist die kleinstmögliche Fläche zu verstehen, die von dem vorgegebenen Rand umschlossen werden kann. Die Minimalflächen sowie die ihnen angenäherten Flächen der erfindungsgemäß erzeugten Formkörper sind "antiklastisch gekrümmt", d.h. sie sind an jedem Punkt in zwei entgegengesetzten, zueinander senkrecht stehenden Richtungen gekrümmt. Diese Gestaltung vermittelt den Formkörpern eine besondere Beulsteifigkeit gegenüber punktförmig einwirkenden Kräften.

Vorteile der Erfindung

Erfindungsgemäß werden Teile des fixierten Randes, zwischen denen vor Beginn der Rückschrumpfung die Kunststoffplatte geradlinig verläuft, nach dem Erwärmen bis zum thermoelastischen Zustand unter Überwindung der freigesetzten Rückstellkraft auf einen größeren Abstand gebracht und vor der Abkühlung in ihrer geänderten Stellung erneut fixiert. Die Vergrößerung des Abstandes wird so festgelegt, daß nach dem Erkalten des Kunststoffes und dem Lösen der Fixierung der Plattenrand in eine Stellung zurückweicht, die der ursprünglichen

- 6 -

Stellung des Randes vor dem Erwärmen bis zum thermoelastischen Zustand entspricht. Die erforderliche
Abstandsvergrößerung läßt sich nach dem Hooke'chen-Gesetz
angenähert berechnen. Sie muß nämlich etwa dem Dehnungsbeitrag entsprechen, der sich aus dem Elastizitätsmodul
des erkalteten Kunststoffes und der in dem gereckten
Kunststoff eingefrorenen Rückstellkraft ergibt. Diese
Berechnung berücksichtigt allerdings nicht die oben
schon erwähnten additiven Querkräfte. Wesentlich einfacher ist die Ermittlung der erforderlichen Abstandsvergrößerung durch Vorversuche.

Durch das erfindungsgemäße Verfahren werden demnach
Formkörper erhalten, deren Rand dem der ursprünglich
eingesetzten ebenen Ausgangsfläche entspricht. Dadurch
wird eine spangebende Nachbearbeitung des Randes oder
eine entsprechende Vorbehandlung der eingesetzten Platte
entbehrlich.

Das Kunststoffmaterial
kann aus gereckten Platten aus Polymethylmethacrylat,
Polycarbonat-Kunststoffen, Polyvinylchlorid oder anderen, reckbaren Kunststoffen bestehen. Polymethylmethacrylat und Kunststoffe, die überwiegend aus Methylmethacrylat aufgebaut sind, sind bevorzugt. Der lineare
Reckungsgrad in jeder Reckungsachse kann zwischen etwa
40 und 120 %, vorzugsweise 60 bis 90 % liegen. Die Dicke
der eingesetzten Kunststoffplatten beträgt im Interesse
einer ausreichenden Steifigkeit und Festigkeit mindestens 1 mm und vorzugsweise 3 - 8 mm. Dicken über 10 mm sind im allgemeinen nicht erforderlich. Die Größe der eingesetzten Platten ist nahezu beliebig und richtet sich nach Gestalt und Größe der zu erzeugenden Formkörper. In der Regel liegt die Größe der eingesetzten Platten nicht unter 1 und nicht über 20 m² ; der Bereich von 5 - 12 m² ist bevorzugt. Vorzugsweise werden rechteckige, insbesondere quadratische·Platten eingesetzt.

## Das Herstellungsverfahren

Die durch die Erfindung verhinderten Maßabweichungen treten vor allem an den Teilen des Randes auf, zwischen denen vor Beginn der Rückschrumpfung die Kunststoffplatte geradlinig verläuft. Bei tunnelförmigen Formkörpern sind das die Randteile, die die Tunnelöffnungen begrenzen. Deshalb wird das erfindungsgemäße Verfahren vor allem an diesen Rändern durchgeführt. An den Scheitelpunkten treten die Maßabweichungen stärker auf als an den nahe der Basis gelegenen Randteilen der Tunnelöffnungen. Bei der Herstellung tunnelförmiger Formkörper ist es daher zweckmäßig, die die Tunnelöffnung umfassenden Teile des fixierten Randes durch eine Kippbewegung um die Basislinie der Tunnelöffnung auf einen größeren Abstand zu bringen. Auf diese Weise wird am Scheitelpunkt die größte und nahe der Basis die geringste Abstandsvergrößerung erreicht.

Maßabweichungen können auch in der Basisbreite tunnelförmiger Formkörper auftreten. Diese Abweichungen sind jedoch nicht nachteilig, da das Bauelement in dieser Richtung genügend elastisch ist, um Maßabweichungen beim Einbau in eine vorgegebene Öffnung zu kompensieren. Daher kann an diesen Stellen auf die Durchführung der erfindungsgemäßen Maßnahmen verzichtet werden.

Zur Herstellung eines tunnelförmigen Formkörpers, dessen gedachte ebene Ausgangsfläche eine Halbzylinderfläche ist, geht man von einer rechteckigen Kunststoffplatte aus, krümmt sie elastisch zu einer Halbzylinderfläche und fixiert ihren Rand in dieser Stellung. In dieser Stellung wird die Platte auf eine Temperatur im thermoelastischen Zustandsbereich erwärmt, woraufhin die teilweise Rückschrumpfung in Richtung auf eine sattelförmige Minimalfläche einsetzt. Die die Tunnelöffnung umfassenden Ränder werden, wie in der Zeichnung dargestellt, durch eine Kippbewegung um die Basislinie der Tunnelöffnung auf den erforderlichen größeren Abstand gebracht. In dieser Stellung läßt man die Platte unter die Erweichungstemperatur des Kunststoffes erkalten und löst danach die Fixierung.

In der gleichen Weise lassen sich tunnelförmige Formkörper herstellen, deren gedachte ebene Ausgangsflächen parabolisch oder auf andere Weise gekrümmt sind. Entsprechend lassen sich auch tunnelförmige Formkörper herstellen, deren Tunnelöffnungen geradlinig begrenzt und ein- oder mehrmals geknickt sind. Zu ihrer Herstellung sind verschiedene Verfahren anwendbar. Man kann beispielsweise die eingesetzte Kunststoffplatte in einer oder mehreren schmalen, in Längsrichtung des Tunnels durchlaufenden Zonen über die Erweichungstemperatur erwärmen und die Platte zu einem Tunnelprofil knicken. Die kalten Flächen neben den erwärmten Zonen verhindern, daß die letzteren durch die Rückstellkräfte zusammenschrumpfen. Die Ränder des erhaltenen, geknickten Tunnels können in der oben beschriebenen Weise fixiert werden. Anschließend wird wie mit den halbzylinderförmigen Ausgangsflächen verfahren. Bei der Rückschrumpfung verschwinden die Knicklinien in der Tunnelfläche und es bleiben nur Knickpunkte in den Rändern an den Tunnelöffnungen erhalten.

Bei einem anderen Verfahren zur Herstellung gleichartiger Formkörper wird die Ausgangsplatte in Form einer Ebene fixiert und in dieser Stellung bis zum thermoelastischen Zustand erwärmt. Danach wird der fixierte Rand an zwei gegenüberliegenden Seiten um ein oder mehrere Punkte geknickt und im weiteren wie oben verfahren.

Eine Vorrichtung

zur Herstellung von tunnelförmigen Formkörpern mit bogenförmigen Tunneleingängen ist in der beigefügten Zeichnung in Seitenansicht dargestellt. Die zur Fixierung des Plattenrandes dienenden Mittel (1) sind in der Zeichnung nur schematisch dargestellt. Der durch eine punktierte Linie dargestellte Plattenrand (3) wird mittels Spannern (2) in den Fixierungen (1) festgehalten. Der Übersichtlichkeit wegen sind nur zwei
Spannelemente (2) in vereinfachter Form dargestellt
worden. Man verwendet vorzugsweise handelsübliche
Schnellspannelemente in ausreichender Anzahl, um den
gesamten Plattenrand in der erforderlichen Weise zu
fixieren. Die Fixierungsmittel (1) sowie die .verwendeten
Spanner (2) sind auf Trägern (4) angeordnet, die gegenüber den auftretenden Rückstellkräften stabil sind.
Diese Kräfte können sehr erheblich sein und sollen nur
geringfügige Verformungen des Trägers verursachen. Der
Träger besteht aus zwei bogenförmigen Elementen (4,5)
und zwei geraden Elementen (6), die in der erforderlichen Weise verschiebbar gegeneinander gelagert sind.
Im vorliegenden Fall sind sie durch Drehgelenke (7)
verbunden, so daß die bogenförmigen Trägerelemente (4,5)
eine Kippbewegung ausführen können. Dazu können beispielsweise hydraulische Zylinder (8) eingesetzt werden.

Zu Beginn des Verfahrens stehen die bogenförmigen
Trägerelemente (4,5) in der gestrichelt dargestellten
Stellung (4',5'). Nunmehr kann die Ausgangsplatte
aufgelegt, gekrümmt und fixiert werden und befindet sich
dann in der mit (9) bezeichneten Lage. Zum Erwärmen über
die Erweichungstemperatur des Kunststoffes kann die
ganze Vorrichtung in einen Warmluftschrank eingeführt
werden. Für die Verarbeitung von Polymethylmethacrylat-Platten ist eine Temperatur von 110 - 120°C erforderlich. Wenn die Erweichungstemperatur überschritten ist,
nimmt die Platte durch teilweise Rückschrumpfung die mit (10) bezeichnete Stellung ein. Nunmehr können durch Betätigung der Hydraulik-Zylinder (8) die Trägerelemente (4,5) in die dargestellte Schräglage gekippt werden, woraufhin man den Kunststoff in der Stellung (11) unter die Erweichungstemperatur erkalten läßt. Nach dem Lösen der Fixierung nimmt der fertige erkaltete Formkörper die mit (10) bezeichnete Gestalt an.

Der Betrag 12, um den die bogenförmigen Trägerelemente (4,5) aus ihrer Anfangsstellung (4',5') gekippt werden, beträgt bei einer Länge der Basislinie (6) von etwa 3 m und einer Basisbreite der Bogenelemente (4,5) von 2,3 m etwa 10 bis 15 mm.

Verfahren und Vorrichtung zur Herstellung eines starren, einstückigen, dünnwandigen Formkörpers aus grecktem Kunststoff

Patentansprüche

1. Verfahren zur Herstellung eines starren, einstückigen, dünnwandigen Formkörpers aus grecktem Kunststoff, dessen Rand nicht in einer Ebene liegt und der eine kleinere Fläche als die von seinem Rand eingeschlossene gedachte ebene Ausgangsfläche hat, durch Verformen einer ebenen Platte aus biaxial grecktem Kunststoff von wenigstens 1 mm Dicke zu einer nicht in einer Ebene liegenden, mit der genannten Ausgangsfläche übereinstimmenden Gestalt und Fixieren des Plattenrandes in der dadurch erreichten Stellung, Erwärmen der von dem Rand eingeschlossenen Fläche auf eine Temperatur im thermoelastischen Zustandsbereich des Kunststoffes, wobei die von dem Rand eingeschlossene Fläche teilweise rückschrumpfen gelassen wird, während eine Rückschrumpfung des Randes durch die erwähnte Fixierung verhindert wird, und anschließendes Abkühlen des Kunststoffes unter die Erweichungstemperatur,

dadurch gekennzeichnet,

daß Teile des fixierten Randes, zwischen denen vor Beginn der Rückschrumpfung die Kunststoffplatte geradlinig verläuft, nach dem Erwärmen bis zum thermoelastischen Zustand unter Überwindung der freigesetzten Rückstellkraft auf einen größeren Abstand gebracht und vor der Abkühlung in ihrer geänderten Stellung erneut fixiert werden.

2. Verfahren nach Anspruch 1, dadurch gekennzeichnet, daß die Vergrößerung des Abstandes der fixierten Teile des Randes etwa dem Dehnungsbetrag entspricht, der sich aus dem Elastizitätsmodul des erkalteten Kunststoffes und der in dem gereckten Kunststoff eingefrorenen Rückstellkraft ergibt.

3. Verfahren nach den Ansprüchen 1 oder 2, dadurch gekennzeichnet, daß zur Herstellung tunnelförmiger Formkörper diejenigen Teile des fixierten Randes, die die Tunnelöffnungen umfassen, auf einen größeren Abstand voneinander gebracht werden.

4. Verfahren nach Anspruch 3, dadurch gekennzeichnet, daß die die Tunnelöffnung umfassenden Teile des fixierten Randes durch eine Kippbewegung um die Basislinie der Tunnelöffnung auf einen größeren Abstand gebracht werden.

5. Vorrichtung zur Durchführung des Verfahrens nach den Ansprüchen 1 bis 4, enthaltend Mittel zur Fixierung des Plattenrandes, die auf einem gegenüber den bei der Betätigung der Vorrichtung auftretenden Rückstellkräften stabilen Träger angeordnet sind,

dadurch gekennzeichnet, daß wenigstens einige Teile des Trägers, zwischen denen vor Beginn der Rückschrumpfung die fixierte Kunststoffplatte geradlinig verläuft, entgegen den bei der Betätigung der Vorrichtung auftretenden Rückstellkräften verschiebbar gelagert sind und mit einer zur Überwindung der Rückstellkräfte ausreichenden Bewegungsvorrichtung verbunden sind.

6. Vorrichtung nach Anspruch 5, dadurch gekennzeichnet, daß die verschiebbar gelagerten Teile des Trägers mit anderen Teilen des Trägers durch Gelenke verbunden sind, welche Kippbewegungen der verschiebbar gelagerten Teile des Trägers entgegen den bei der Betätigung der Vorrichtung auftretenden Rückstellkräften zulassen.

0096248

1/1

**0096248**

Nummer der Anmeldung

### Europäisches Patentamt

## EUROPÄISCHER RECHERCHENBERICHT

| EINSCHLÄGIGE DOKUMENTE | | EP 83104887.1 | |
|---|---|---|---|
| **Kategorie** | **Kennzeichnung des Dokuments mit Angabe, soweit erforderlich, der maßgeblichen Teile** | **Betrifft Anspruch** | **KLASSIFIKATION DER ANMELDUNG (Int. Cl. 3)** |
| D,A | <u>WO - A1 - 81/01 304</u> (RÖHM GMBH) <br> * Gesamt * <br> ---- | | B 29 C 17/03 <br><br><br><br><br><br> **RECHERCHIERTE SACHGEBIETE (Int. Cl. 3)** <br><br> B 29 C |

Der vorliegende Recherchenbericht wurde für alle Patentansprüche erstellt

| Recherchenort | Abschlußdatum der Recherche | Prüfer |
|---|---|---|
| WIEN | 09-09-1983 | BAUMGARTNER |

**KATEGORIE DER GENANNTEN DOKUMENTEN**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82